# FASCICULE DE BREVET EUROPEEN

(11) **EP 0 426 527 B1**
(45) Date de publication et mention de la délivrance du brevet: **15.09.1993**
(21) Numéro de dépôt: 90402986.5
(22) Date de dépôt: 24.10.1990
(51) Int. Cl.: F01D 5/00, B23P 6/00, B23D 79/08, B24D 15/02

(54) **Outillage de retouche d'aubes de rotor d'une turbomachine et procédé de retouche utilisant cet outillage**
Werkzeug zum Nacharbeiten von Turbinen-Rotorschaufeln und dieses Werkzeug verwendende Nacharbeitungsverfahren
Tooling for retouching of turbine rotor blades and process making use of that tooling

(30) Priorité: 25.10.1989 FR 8913966
(43) Date de publication de la demande: 08.05.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Desgranges, Pierre Louis, F-91100 Corbeil Essonnes (FR); Werstler, Jérome, F-77190 Dammarie les Lys (FR)
(74) Mandataire: Moinat, François

(56) Documents cités:
- EP-A- 0 150 245
- CH-A- 107 674
- FR-A- 1 311 292
- FR-A- 2 081 223
- US-A- 4 078 864

## Description

La présente invention concerne un outillage de retouche d'aubes de rotor de turbomachine sans démontage de l'ensemble et également un procédé de retouche constitué par le mode d'utilisation dudit outillage.

Lors d'un contrôle après fonctionnement d'une turbomachine, notamment dans le cas d'un moteur aéronautique soumis à des critères stricts d'acceptation nécessités par les conditions d'utilisation, ou lors d'un contrôle en cours de révision, il arrive d'observer sur la surface de certaines aubes de rotor un ou plusieurs défauts strictement localisés. Ces défauts présentent généralement une forme en creux avec ou sans une légère surépaisseur sur les bords et ont un aspect de traces d'impact, de légères entailles ou de traces de défaut matière. Leur importance est limitée à quelques dixièmes de millimètre. L'acceptation de l'aube endommagée ou de l'ensemble de rotor la comportant implique une retouche du défaut en vue d'obtenir un adoucissement des bords de la zone affectée. Ce type de retouche nécessitant l'utilisation d'un outil d'enlèvement de matière a imposé jusqu'à ce jour un démontage de l'ensemble concerné, notamment dans le casd'un compresseur à plusieurs étages, ce qui conduit à des durées d'intervention importantes d'où il résulte une immobilisation des matériels et des coûts élevés.

On connaît par ailleurs l'utilisation d'appareillages pour l'observation et le contrôle dans des zones inaccessibles directement, notamment à l'intérieur de turbomachines ou sur certains ensembles montés. US-A-4 078 864, FR-A-2 443 697, FR-A-2 561 399 et US-A-4 659 221 décrivent ainsi des exemples d'application de ces techniques connues, mais ne fournissent toutefois aucune solution satisfaisante pour la retouche et la correction des défauts qu'ils permettent seulement d'observer au moyen d'un endoscope.

L'invention a pour but de réaliser un outillage permettant à un opérateur d'effectuer à l'aide d'un outil lesdites retouches dans des zones d'accès difficile, notamment sur des aubes de rotor de turbomachine, en utilisant des ouvertures obturables existantes, prévues notamment pour le passage d'endoscope au niveau du carter fixe enveloppant ledit rotor.

Un outillage de retouche répondant à ces conditions comporte un endoscope associé à un corps accessible à l'opérateur, restant en cours d'utilisation à l'extérieur du carter enveloppant le rotor et portant un tube-support déplaçable qui traverse un trou d'endoscope ménagé sur ledit carter ainsi qu'une tige de manoeuvre reliée de manière articulée à un élément de rallonge repliable dont l'extrémité porte un outil. Un appareil de ce type est connu dans le domaine médical par FR 1 321 292 et est généralement utilisé pour effectuer des biopsies. Afin d'obtenir des possibilités de blocage et de réglages, un outillage conforme à l'invention est caractérisé en ce que l'endoscope est associé à un porte-endoscope dans lequel l'endoscope est pincé dans un double-cône de blocage relié par un levier à une bague de serrage, ledit porte-endoscope étant muni d'un bouton moleté de réglage angulaire et d'un levier de réglage longitudinal.

Le procédé correspondant de retouche conforme à l'invention consiste après mise en place de l'outillage, localisation du défaut par exploration visuelle et déploiement du porte-outil, à faire exécuter à l'outillage un mouvement alternatif de va-et-vient à travers le trou d'endoscope de manière à faire travailler l'outil sur la pièce, sur les bords du défaut sous le contrôle visuel de l'opérateur à l'endoscope.

Avantageusement, un outillage de retouche conforme à l'invention peut être automatisé, le corps d'outil comportant un motoréducteur électrique déplaçant suivant un mouvement de va-et-vient le tube-support par l'intermédiaire d'un ensemble bielle-manivelle et d'un entraîneur fixé sur ledit tube-support.

Le procédé correspondant de retouche comporte dans ce cas un travail automatique de l'outil sur la pièce.

D'autres caractéristiques et avantages de l'invention seront mieux compris à la lecture de la description qui va suivre des modes de réalisation de l'invention, en référence aux dessins annexés sur lesquels :
- la figure 1 représente, selon une vue schématique partielle en perspective et en coupe, une partie de turbomachine au niveau d'un rotor monté, sur laquelle est adapté un outillage de retouche selon un premier mode de réalisation de l'invention ;
- la figure 2 représente une vue schématique en coupe longitudinale de l'outillage de retouche de la figure 1 ;
- les figures 3 et 4 montrent un détail agrandi suivant III de la figure 2 de l'outillage des figures 1 et 2 ;
- la figure 5 montre selon une vue partielle de détail de l'outillage des figures 1 et 2 montrant le porte-outil en position déployée selon un détail agrandi ;
- la figure 6 représente, selon une vue schématique en perspective analogue à celle de la figure 1, un outillage de retouche selon un deuxième mode de réalisation de l'invention.
- la figure 7 représente une vue schématique en coupe longitudinale de l'outillage de retouche de la figure 6;
- la figure 8 montre une vue partielle de dessus avec le couvercle enlevé de l'outillage de la figure 7 ;
- la figure 9 montre une vue de l'outillage de la figure 7 en coupe suivant la ligne IX-IX de la figure 7.

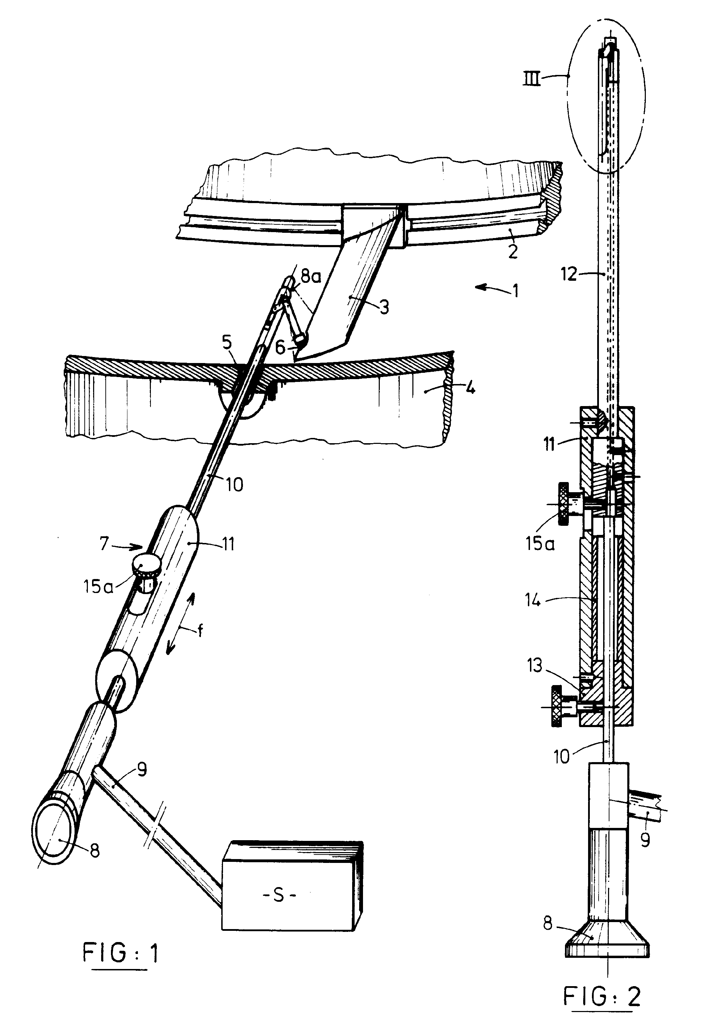

Sur la figure 1, montrant un exemple d'application dans l'utilisation d'un outillage de retouche conforme à l'invention pour la retouche de défauts localisés sur aube d'un rotor monté, ledit rotor 1 comporte un tambour 2 partiellement représenté portant des aubes dont l'une 3 appartenant à un étage du rotor est montrée. Ledit rotor 1 est monté dans un carter 4 appartenant au stator de turbomachine associé audit rotor 1. Ledit carter 4 comporte, notamment à la hauteur de chaque étage du rotor 1, des trous de passage d'endoscope dont l'un 5 est représenté. L'aube 3 représentée comporte notamment sur un bord un défaut localisé 6 décelable lors d'un examen visuel au moyen d'un endoscope d'un type connu en soi. Un outillage 7 conforme à un premier mode de réalisation de l'invention et destiné à la retouche de ce genre de défaut constitué par une légère entaille ou une trace d'impact sur l'aube est représenté sur la figure 1. On se reportera aux figures 2 à 5 pour les détails de réalisation dudit outillage 7.

L'outillage 7 comporte d'abord les éléments classiques d'un endoscope d'un type connu en soi et permettant l'examen visuel de pièces à l'intérieur d'une turbomachine et notamment les aubes d'un rotor à l'état monté. On trouve ainsi un oculaire 8 utilisable par un opérateur, un moyen de liaison 9 à une source lumineuse non représentée en détails et symbolisée au dessin en S, un objectif 8a et un moyen de liaison 10 entre oculaire et objectif, qui est monté dans un corps d'outillage 11.

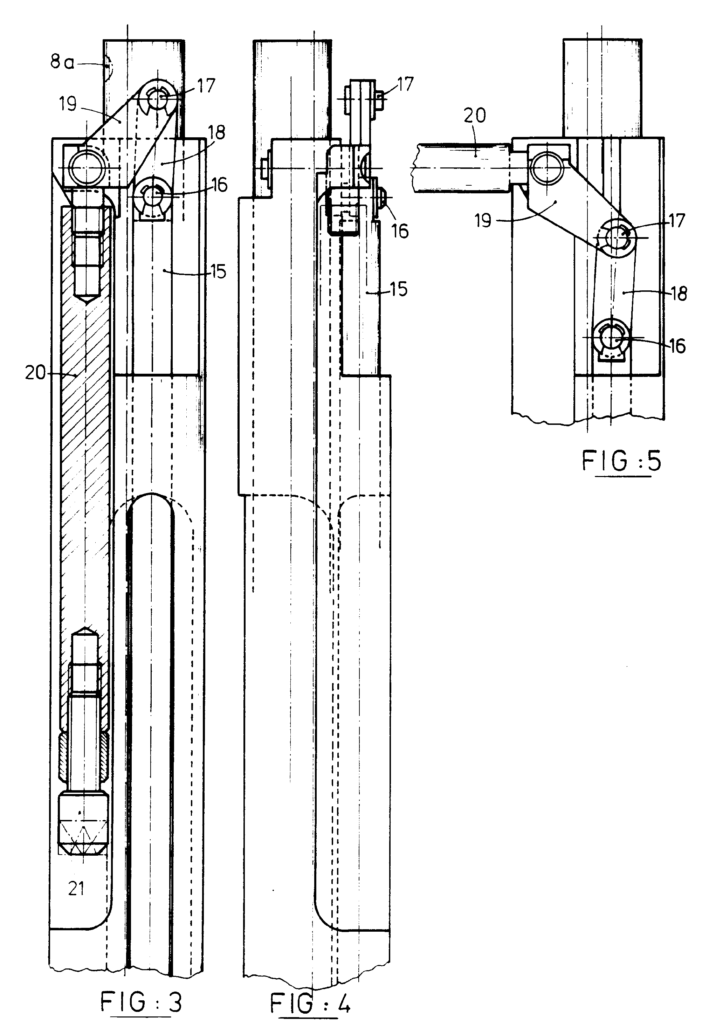

L'outillage 7 est complété par un tube 12 solidarisé par exemple par vis audit corps 11. Le montage des éléments sur le corps 11 est complété par un bouchon 13 et une entretoise interne 14. De manière remarquable et conforme à l'invention, au voisinage de la tige de liaison 9 d'endoscope est insérée une tige de manoeuvre 15 reliée de manière articulée et en utilisant, dans l'exemple de réalisation montré sur les figures 3 et 5 de détail, deux articulations à axes 16 et 17, une biellette 18 et un levier 19, à un élément de rallonge 20 repliable qui porte un outil diamanté 21. On notera que dans certaines applications aux moteurs aéronautiques visées par l'invention, le diamètre de certains trous tels que 5 de passage d'endoscope peut être de 8 mm, ce qui impose les dimensions des éléments qui viennent d'être décrits, la partie de l'outillage 7 située au-delà du corps 11 devant notamment pouvoir coulisser librement dans ledit trou 5, comme cela sera précisé plus loin.

On va maintenant décrire le mode d'utilisation de l'outillage de retouche 7 qui correspond au procédé de retouche de défaut localisé sur pièces non directement accessibles conforme à l'invention.

Ledit procédé sera également décrit dans le mode de réalisation en référence aux dessins annexés qui ont été décrits ci-dessus et qui concerne la retouche de défauts localisés sur aubes d'un rotor monté de turbomachine.

Au premier stade, l'élément de rallonge 20 constituant le porte-outil de l'outillage 7 étant dans la position repliée représentée sur la figure 3, la partie de l'outillage 7 située au-delà du corps 11 est introduite par le trou 5 du carter 4. Puis, l'opérateur par visée dans l'oculaire 8 et déplacements de l'outillage 7 effectue la localisation du défaut 6 sur l'aube 5 et la mise en place correspondante de l'outillage 7. Au stade suivant, l'opérateur actionne la tige de manoeuvre 15 pour déployer le porte-outil 20, suivant le principe de fonctionnement indiqué par la figure 4, de manière à amener la partie travaillante de l'outil 21 au contact des bords du défaut observé 6. Après mise en place, la tige de manoeuvre 15 est bloquée au moyen d'une vis 15a. Enfin, tout en contrôlant le travail effectué par visée au-travers de l'oculaire 8, l'opérateur déplace légèrement l'outillage 7 par un mouvement alternatif de va-et-vient à travers le trou 5 du carter, comme représenté par la double flèche f sur la figure 1, de manière à faire exécuter par l'outil 21 un travail mécanique d'adoucissement des bords du défaut 6 par enlèvement de matière grâce à l'action des éléments abrasifs dudit outil 21. Ensuite, quand la retouche est jugée suffisante par examen visuel, il reste à l'opérateur à effectuer les opérations en sens inverse de désengagement de l'outillage 7 : repli du porte-outil 20 au moyen de la tige de manoeuvre 15 et extraction de la partie engagée de l'outillage 7 par le trou 5 de carter.
En utilisant l'outillage 7 conforme à l'invention qui vient d'être décrit selon le procédé de retouche ci-dessus, des résultats satisfaisants ont été obtenus. Notamment, la qualité requise a été obtenue en assurant un gain de temps important par rapport à une retouche effectuée de la manière précédemment connue imposant un désassemblage du module de turbomachine concerné. La durée d'intervention a ainsi pu être réduite d'un facteur 2 ou 3 selon les applications.

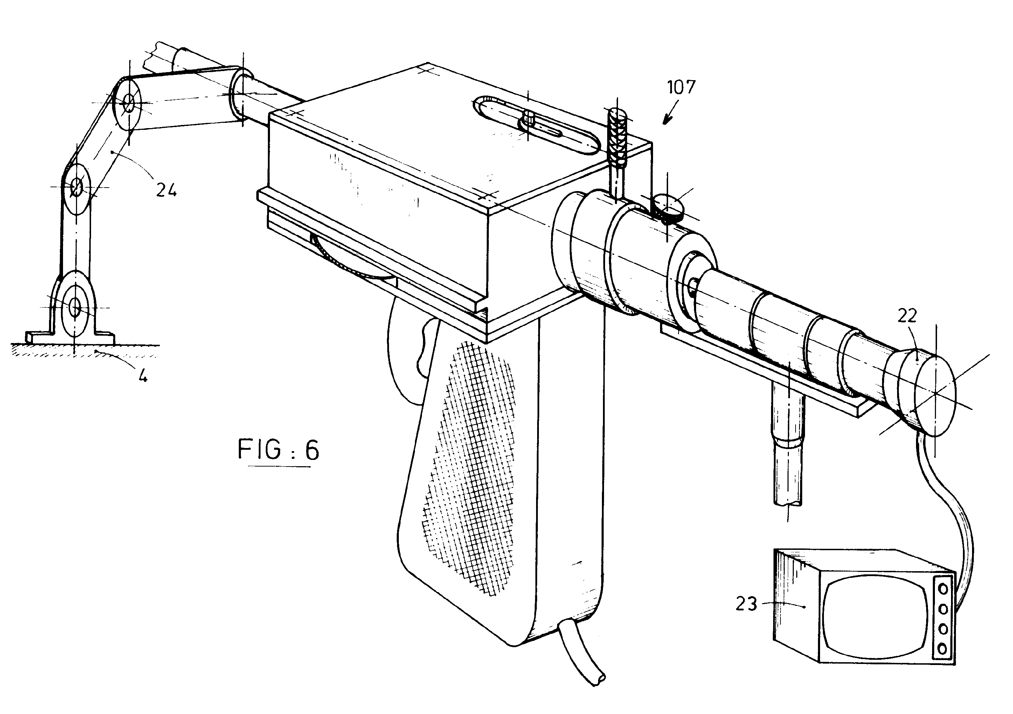

Selon un deuxième mode de réalisation de l'invention, schématiquement représenté sur la figure 6, une automatisation de l'opération est obtenue en limitant les interventions de l'opérateur aux opérations de mise en place, réglages, surveillance, contrôle et démontage. Le but complémentaire est dans ce cas d'effectuer le travail de l'outil sur la pièce de manière automatisée.

On conservera dans la description du deuxième mode les références des éléments identiques ou analogues utilisées pour la description précédente du premier mode en référence aux figures 1 à 5, augmentés d'une centaine.

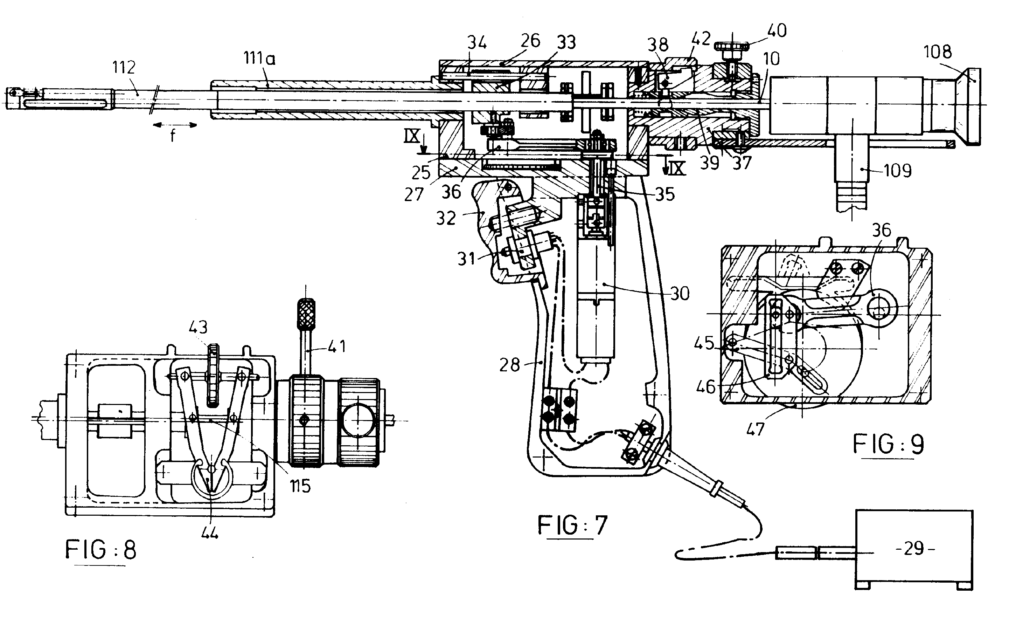

On retrouve ainsi dans un outillage 107 conforme au deuxième mode de réalisation de l'invention et représenté sur les figures 6 et 7 :
- un oculaire 108, une liaison 109 à la source lumineuse S, la liaison entre l'oculaire et un objectif, un tube 112 ;
- une tige de manoeuvre 115 relié par biellettes et levier à un élément de rallonge repliable qui porte l'outil diamanté 21.

Cependant, en variante, l'oculaire 108 destiné à un contrôle visuel du défaut sur pièce par l'opérateur peut être remplacé par une caméra vidéo 22 reliée à un moniteur de contrôle à écran 23, équipements connus en soi.

L'outillage 107 est monté sur le carter 4 au moyen d'un bras articulé 24 formant support.

Un corps d'outil modifié 111 comporte un fût 11a qui supporte ledit tube 112 et un boîtier 25 muni d'un couvercle 26 et d'un fond 27 et prolongé par une poignée 28. La poignée 28 est reliée à une alimentation électrique 29 et recouvre un motoréducteur 30 commandé par un interrupteur 31 monté sur une gachette 32. Un entraînteur 33 coulissant sur un axe 34 monté à l'intérieur du boîtier 25 est fixé solidairement sur le tube 112. L'axe d'entraînement 35 dudit motoréducteur 30 est relié audit entraîneur 33 par un ensemble bielle-manivelle 36, constituant ainsi un système de déplacement automatique longitudinal par va-et-vient du tube 112 portant à son extrémité l'outil 21 de retouche par limage. Le guidage de l'ensemble mobile est assuré par l'entraîneur 33.

Un porte encoscope 37 prolonge le boîtier 25 du côté amont et comporte le dispositif de réglage de position de l'endoscope. Ce dispositif comporte un levier 38 et un double-cône 39 qui pince l'endoscope. Un bouton moleté 40 permet par un réglage angulaire d'orienter le faisceau de l'endoscope vis à vis du défaut, notamment sur une aube de rotor de turbomachine. Un déplacement longitudinal au moyen d'un levier 41 visible sur la figure 8 permet d'effectuer le réglage fin et le blocage est obtenu par serrage d'une bague 42 qui actionne le double-cône 39.

Comme visible sur la figure 8, le déplacement de la tige de manoeuvre 115 commandant le déplacement de l'élément de rallonge 20 et la mise en position de l'outil 21 est obtenu au moyen d'une molette 43 actionnant un système à ballustre 44.

Le réglage de la course de l'outil 21 avant l'image de retouche du défaut sur la pièce est effectué au moyen du dispositif représenté sur la figure 9. Ce dispositif comporte un levier 45 et une coulisse 46 dont la position réglée au moyen d'une molette 47 permet d'ajuster la course longitudinale de la bielle 36 d'où résulte la course de l'ensemble mobile, tube 112 et outil 21. Un procécé de retouche d'un défaut localisé sur pièces non directement accessibles, analogue au procédé précédemment décrit comportant l'utilisation de l'outillage de retouche 7 qui a été décrit en référence aux figures 1 à 5, a également été mis au point et comporte l'utilisation de l'outillage de retouche 107 qui vient d'être décrit en référence aux figures 6 à 8. L'introduction de l'outillage 107 et l'exploration visuelle du défaut sur pièce restent identiques au premier mode de réalisation. En variante cependant, la visée directe dans l'oculaire 108 peut être remplacée par une observation sur le moniteur de contrôle vidéo 23 utilisant la caméra vidéo 22. Après localisation du défaut à retoucher, l'opérateur achève la mise en place de l'outillage 107 en bloquant la fixation du bras articulé 24 sur le carter 4 et la fixation de l'outillage 107 par les moyens prévus de réglage angulaire par le bouton moleté 40 et de réglage longitudinal par le levier 41 puis il effectue le blocage de l'ensemble par serrage de la bague 42. Il effectue ensuite la mise en place et le réglage fin de l'outil 21 par manoeuvre de la tige 115 au moyen de la mollette 43, de manière à amener la partie travaillante de l'outil 21 au contact des bords du défaut observé 6. Il termine par le réglage de la course de l'outil 21 au moyen de la molette 47. Enfin il actionne l'interrupteur 31 de mise en route du motoréducteur 30, d'où résulte un mouvement alternatif de va-et-vient du tube 112 et de l'ensemble mobile, de manière à faire exécuter par l'outil 21 un travail mécanique d'adoucissement des bords du défaut 6 par enlèvement de matière par limage, de manière analogue au travail effectué par la méthode manuelle précédemment décrite mais en évitant les inconvénients des aléas tributaires dans ce cas du seul tour de main de l'opérateur.

Pendant ce temps, l'opérateur exerce une surveillance, soit en contrôlant le travail effectué par visée au travers de l'oculaire 108, soit en observant l'image fournie par le moniteur de contrôle vidéo 23. Quand la retouche est jugée suffisante, il este à l'opérateur à effectuer les opérations en sens inverse d'arrêt du motoréducteur 30, de désengagement de l'outillage 107 : repli du porte-outil 20 par l'intermédiaire de la molette 43, déblocage du bras articulé 24 et extraction du carter.

## Revendications

1. Outillage de retouche "in situ" de défaut localisé (6) sur aube(s) (3) d'un rotor (1) monté à l'intérieur d'un carter (4) de turbomachine comportant un dispositif d'observation d'un type connu en soi tel qu'un endoscope comprenant une source lumineuse (S), un oculaire (108), un objectif (8a) et un moyen de liaison (10) ledit endoscope étant associé à un corps (111) accessible à l'opérateur, restant en cours d'utilisation à l'extérieur du carter (4) enveloppant le rotor (1) et portant un tube-support (112) déplaçable qui traverse un trou (5) d'endoscope ménagé sur ledit carter (4) ainsi qu'une tige de manoeuvre (115) reliée de manière articulée à un élément de rallonge (20) repliable dont l'extrémité porte un outil diamanté (21), caractérisé en ce que l'endoscope est associé à un porte-endoscope (37) dans lequel l'endoscope est pincé dans un double-cône (39) de blocage relié par un levier (38) à une bague de serrage (42), ledit porte-endoscope (37) étant muni d'un bouton moleté (40) de réglage angulaire et d'un levier (41) de réglage longitudinal.

2. Outillage de retouche selon la revendication 1 dans lequel un système à ballustre (44) et une molette (43) sont montés sur la tige de manoeuvre (115) pour en assurer les déplacements.

3. Outillage de retouche selon l'une quelconque des revendications 1 et 2 dans lequel un dispositif à levier (45) et coulisse (46) actionné par un molette (47) est associé à l'ensemble bielle-manivelle (36) et permet d'effectuer un réglage de la course longitudinale de l'outil (21).

4. Outillage selon l'une des revendications 1 à 3 dans lequel l'oculaire (108) de vision est associé à une caméra vidéo (22) et à un moniteur de contrôle à écran (23).

5. Outillage de retouche selon l'une quelconque des revendications 1 à 4 dans lequel le corps d'outil (111) comporte un motoréducteur électrique (30) déplaçant suivant un mouvement de va-et-vient ledit tube-support (112) par l'intermédiaire d'un ensemble bielle-manivelle (36) et d'un entraîneur (33) fixé sur ledit tube-support (112).

6. Procédé de retouche d'un défaut localisé (6), notamment sur une aube (3) de rotor (1) de turbomachine à l'état monté, utilisant un outillage (107) conforme à l'une quelconque des revendications 1 à 5 caractérisé en ce qu'il comporte les étapes suivantes :
(a) - introduction de l'outillage (107) par un trou de passage (5) ;
(b) - localisation du défaut (6) sur pièce par exploration visuelle au moyen d'un endoscope (108,10), partie dudit outillage (107) ;
(c) - blocage de l'outillage (107) et fixation sur un carter (4) de l'ensemble à retoucher au moyen d'un bras articulé (24) ;
(d) - réglage angulaire de l'endoscope au moyen d'un bouton moleté (40) et réglage longitudinal de l'endoscope par un levier (41) puis blocage au moyen d'une bague de serrage (42) ;
(e) - déploiement d'un porte-outil (20) et mise en position d'un outil (21) par manoeuvre d'une tige (115) de l'outillage (107) au moyen d'une molette (43) ;
(f) - réglage de la course de l'outil (21) au moyen d'une molette (47) ;
(g) - mise en route d'un motoréducteur (30) assurant un mouvement alternatif de va et vient de l'ensemble mobile (112,20,21) de l'outillage de manière à faire travailler l'outil (21) sur les bords du défaut (6), sous contrôle de l'opérateur, au moyen de l'endoscope ;
(h) - arrêt du motoréducteur (30) ; repli du porte-outil (20) et démontage et extraction de l'outillage (107).

## Patentansprüche

1. Werkzeugausrüstung zur In-Situ-Nachbearbeitung einer lokalisierten fehlerhaften Stelle (6) an einer Schaufel bzw. an Schaufeln (3) eines im Innern des Gehäuses einer Turbomaschine (4) montierten Rotors, mit einer Beobachtungsvorrichtung an sich bekannter Bauart, z.B. einem Endoskop, die eine Lichtquelle (S), ein Okular (108), ein Objektiv (8a) und eine Verbindungseinrichtung (10) für das Endoskop aufweist, die mit einem für die Bedienungsperson zugänglichen Körper (111) verbunden ist, der während der Benutzung außerhalb des den Rotor (1) umschließenden Gehäuses (4) verbleibt und ein verstellbares Trägerrohr (112) trägt, das durch eine an dem Gehäuse (4) angebrachte Endoskopöffnung (5) dringt, sowie eine Betätigungsstange (115), die mit einem einfahrbaren Verlängerungselement (20) gelenkig verbunden ist, das an seinem Ende ein Diamantwerkzeug (21) trägt, **dadurch gekennzeichnet**, daß das Endoskop mit einem Endoskopträger (37) verbunden ist, in welchem das Endoskop in einem Blockier-Doppelkonus (39) eingespannt ist, der über einen Hebel (38) mit einem Spannring (42) verbunden ist, wobei der Endoskopträger (37) mit einem gerändelten Einstellknopf (40) zur Einstellung der Winkelposition und einem Hebel (41) zur Einstellung der longitudinalen Position ausgestattet ist.

2. Werkzeugausrüstung zur Nachbearbeitung nach Anspruch 1, bei der an der Betätigungsstange (115) ein Zirkelsystem (40) und eine Rändelscheibe (34) montiert sind, die ihre Verstellung ermöglichen.

3. Werkzeugausrüstung zur Nachbearbeitung nach einem der Ansprüche 1 und 2, bei der der Stangen-Kurbel-Einheit (36) eine Vorrichtung mit Hebel (45) und Gleitführung (46) zugeordnet ist, die eine Regulierung des longitudinalen Hubs des Werkzeugs (21) ermöglicht.

4. Werkzeugausrüstung zur Nachbearbeitung nach einem der Ansprüche 1 bis 3, bei der das Beobachtungsokular (108) mit einer Videokamera (22) und einem Kontrollmonitor mit Bildschirm (23) verbunden ist.

5. Werkzeugausrüstung zur Nachbearbeitung nach einem der Ansprüche 1 bis 4, bei der der Werkzeugkörper (111) einen elektrischen Getriebemotor (30) aufweist, der das genannte Trägerrohr (112) über eine Stangen-Kurbel-Einheit (36) und einen an dem Trägerrohr (112) befestigten Mitnehmer (33) mit einer Hin- und Herbewegung beaufschlagt.

6. Verfahren zum Nachbearbeiten einer lokalisierten fehlerhaften Stelle (6), insbesondere an einer Schaufel (3) eines Turbomaschinenrotors (1) in montiertem Zustand unter Verwendung einer Werkzeugausrüstung nach einem der Ansprüche 1 bis 5,
**gekennzeichnet durch** folgende Verfahrensschritte.
(a) - Einführen der Werkzeugausrüstung (107) durch eine Durchgangsöffnung (5);
(b) - Lokalisieren der fehlerhaften Stelle (6) an dem Werkstück durch visuelle Untersuchung mit Hilfe eines einen Teil der Werkzeugausrüstung (107) bildenden Endoskops (108, 10);
(c) - Blockieren der Werkzeugausrüstung (107) und Fixieren an einem Gehäuse (4) der nachzuarbeitenden Einheit mit Hilfe eines Gelenkarms (24);
(d) - Einrichten des Endoskops bezüglich seiner Winkelposition mit Hilfe eines gerändelten Knopfes (4) und bezüglich seiner longitudinalen Position durch einen Hebel (41), dann Blockieren mit Hilfe eines Spannrings (42);
(e) - Ausfahren eines Werkzeugträgers (20) und Plazieren eines Werkzeugs (21) durch Betätigen einer Stange (115) der Werkzeugausrüstung (107) mit Hilfe einer Rändelscheibe (43);
(f) - Einstellen des Hubs des Werkzeugs (21) mit Hilfe einer Rändelscheibe (47);
(g) - Einschalten eines Getriebemotors (30), der eine alternierende Hin- und Herbewegung der beweglichen Einheit (112, 20, 21) der Werkzeugausrüstung in der Weise bewirkt, daß das Werkzeug (21) unter der mit Hilfe des Endoskops erfolgenden Kontrolle der Bedienungsperson auf die Ränder der fehlerhaften Stelle (6) einwirkt;
(h) - Anhalten des Getriebemotors (30); Einfahren des Werkzeugkägers (20) und Demontieren und Herausziehen der Werkzeugausrüstung (107).

## Claims

1. Tool for the in situ dressing of a localised defect on a blade(s) (3) of a rotor (1) installed inside a casing (4) of a turboshaft engine comprising a viewing device of known type such as an endoscope comprising a light source (S), an eyepiece (108) a lens (8a) and a means of connection (10), the said endoscope being associated with a body (111) accessible to the operator, remaining during use, outside the casing (4) surrounding the rotor (1) and carrying a movable tubular support (112) which passes through an endoscope hole (5) formed in the said casing (4) as well as a manoeuvring rod (115) connected in an articulated manner to a folding extension element (20) whose end carries a diamond-tipped tool-head (21), characterised in that the endoscope is associated with an endoscope-carrier (37) in which the endoscope is clamped between twin-cones (39) connected by a lever (38) to a clamping ring (42), the said endoscope-carrier (37) being fitted with a knurled wheel (40) providing angular adjustment and a lever (41) for longitudinal adjustment.

2. Tool for dressing in accordance with Claim 1 in which a spring bow divider system (44) and a knurled wheel (43) are fitted to the manoeuvring rod (115) to ensure its movement.

3. Tool for dressing in accordance with either of Claims 1 and 2 in which a lever device (45) and slide (46) actuated by a knurled wheel (47) is associated with a link/crank assembly (36) and allows the longitudinal travel of the tool-head (21) to be adjusted.

4. Tool in accordance with one of Claims 1 to 3 in which the viewing eyepiece (108) is associated with a video camera (22) and a monitor screen (23).

5. Tool for dressing in accordance with any of Claims 1 to 4 in which the body (111) of the tool comprises an electric motor with reduction gearing (30) moving in a two and fro motion the said tubular support (112) through the intermediary of a link/crank assembly (36) and a driver (33) fixed to the said tubular support (112).

6. Process for dressing a localised defect notably on a blade (3) of a rotor (1) of a turboshaft engine when it is installed therein, using a tool (107) conforming to any of the Claims 1 to 5, characterised in that it comprises the following steps:
(a) - introduction of the tool (107) through a hole (5);
(b) - location of the defect (6) on a component by visual exploratory examination by means of an endoscope (108, 10), a part of the said tool;
(c) - locking of the tool (107) and fixing it to a casing (4) of the assembly to be dressed by means of an articulated arm (24);
(d) - angular adjustment of the endoscope by means of a knurled wheel (40) and longitudinal adjustment of the endoscope by a lever (41) then locking it in position by means of a clamping ring (42);
(e) - deployment of a tool-carrier (21) by manoeuvring a rod (115), part of the tool (107), by means of a knurled wheel (43);
(f) - adjusting the travel of the tool-head (21) by means of a knurled wheel (47);
(g) - starting the reduction-geared motor (30), ensuring reciprocal movement of the moving assembly (112, 20, 21) of the tool so as to cause the tool-head (21) to work on the edges of the defect, under the control of the operator, who uses the endoscope;
(h) - stoppage of the motor (30); folding back of the tool-carrier (20), dismantling and removal of the tool (107).
